# EUROPEAN PATENT APPLICATION

(11) **EP 3 521 232 A1**
(43) Date of publication of application: **07.08.2019**
(21) Application number: 18154941.1
(22) Date of filing: 02.02.2018
(51) Int. Cl.: B66B 11/04, H02K 41/03

(54) **ELECTRIC LINEAR MOTOR**

(71) Applicant: KONE Corporation, 00330 Helsinki (FI)
(72) Inventor: KORHONEN, Tuukka, 00330 Helsinki (FI)
(74) Representative: Glück Kritzenberger Patentanwälte PartGmbB

(57) **Abstract**

The invention refers to an elevator (10, 100) comprising at least one elevator car (16) running in an elevator shaft, which elevator does not have a counterweight and in which elevator the elevator car (16) is suspended and driven by a linear electric motor (14) comprising at least one linear stator (50) having stator teeth (52), which stator (50) is designed to be located in a fixed correlation to an environment and extending over a vertical movement path of the elevator car (16) in the shaft, and at least one mover (24, 26; 126) connected to the at least one elevator car (16) and co-acting and moving along the stator (50), characterized in that at least the top portion (92) of the stator teeth (52) facing the mover (24, 26) is extending downwards.

## Description

### Background of the invention

The present invention relates to an elevator comprising at least one elevator car running in an elevator shaft which elevator does not have a counterweight and in which elevator the elevator car is suspended and driven by a linear electric motor. The linear electric motor comprises at least one linear stator having stator teeth, which are formed by teeth provided on a side face of a ferromagnetic stator (rod), which teeth are spaced apart by teeth gaps. Such a ferromagnetic stator rod is for example a rod comprised of iron or iron alloy to which the teeth structure has been milled in a side face of said rod, which teeth structure then forms a side face of the stator beam. Such a stator rod is easy to produce and can be easily supported in the stator beam of the present invention, eventually forming the stator beam.

The stator is designed to be located in a fixed correlation to an environment, e.g. to the walls of an elevator shaft or to the guide rails and extending over a vertical movement path of the elevator car in the shaft. The linear motor further comprises at least one mover connected to the at least one elevator car, which co-acts with the stator and moves along it. In this type of elevator the whole weight of the car is carried by the electric linear motor.

### Summary of the invention

It is object of the present invention to provide an elevator with an electric linear motor which is better able to satisfy the upwards directed force requirement for the car suspension.

This object is solved with an elevator according to claim 1. Preferred embodiments of the invention are subject-matter of the dependent claims. Embodiments of the invention are also shown in the description and in the drawings. The features of different embodiments of the invention can be applied in connection with other embodiments within the scope of the basic inventive concept.

According to the invention the elevator comprises at least one elevator car running in an elevator shaft which elevator does not have a counterweight and in which elevator the elevator car is suspended and driven by a linear electric motor. The linear electric motor comprises at least one linear stator having stator teeth. The stator is designed to be located in a fixed correlation to an environment, e.g. to the walls of an elevator shaft or to the guide rails and extending over a vertical movement path of the elevator car in the shaft. The linear motor further comprises at least one mover connected to the at least one elevator car, which co-acts with the stator and moves along it. According to the invention at least the free ends of the stator teeth facing the mover are extending downwards.

This invention introduces a specific stator structure for counterweight less elevator, in particular for linear motor of multicar elevator, wherein high-force / high-torque direction is always downwards which acts better against gravity. Thus, the magnetic circuit of the driving motor is optimized in that the stator teeth and/or at least the top part thereof are turned a bit downwards from the horizontal plane. Because of this the magnetic field coming from the rotor over the air gap to stator produces an upwards directed force. This magnetic field geometry means that the reluctance of the magnetic circuit is smaller for the above-mentioned direction and higher for the other direction, when stator teeth faces the related mover parts such that magnetic field coming from mover to stator has an upwards component and returning magnetic field has an downwards component, respectively. This ensures quite a sufficient upwards force on the at least one mover of the elevator car with a reduced current requirement

Generally, the advantage of an electric linear motor is that the linear stator only needs ferromagnetic poles which can be for example stator teeth formed in a side face of a stator rod made of ferromagnetic material, for example made of iron or an iron-containing alloy. Via this means, the stator or a stator beam supporting the linear stator can be made more lightweight and can thus be used e.g. for high elevators, particularly for elevators with a height of more than 50 m, preferably of more than 100 m. This linear motor concept is therefore adapted for any high-rise applications as this solution does not need any elevator ropes which are an obstacle in the design of high-rise elevators because of the correlated weight. Preferably, the stator beam comprises a support structure for at least two stators and at least one fastening element to fix the support structure to the elevator shaft. The advantage of this construction is that the motor force can be doubled up as the stator beam now comprises two stators and a correspondingly larger force generating surface of the linear motor.

Preferably, the stator teeth are extending downwards over the upper part of their length, preferably over their entire length. This way the stator teeth are quite easy to manufacture.

In an alternative embodiment the stator teeth are extending downwards only a half of their total length at the maximum. Via this measure the form of the teeth could be better machined to correspond to the magnetic flux lines. Thus, preferably the stator teeth may have a curved form. The losses of such a geometry are smaller and the effectivity of such a magnetic stator geometry is better.

In a preferred embodiment of the invention the central line of the stator teeth is curved. This better corresponds to the magnetic field geometry and improves the efficiency of the electric linear motor.

The efficiency of the motor is further increased if the base of the stator teeth is wider than their free ends facing the mover.

Preferably, the stator, e.g. mounted on a vertical stator beam in the environment, e.g. elevator shaft and the mover of the element, e.g. elevator car form guide means for the travel of the car. Usually an elevator car is guided with guide rollers along guide rails extending vertically in the elevator shaft. This common technology can advantageously been omitted if the stator beam of the linear motor itself together with the mover form the guide means for the element with respect to the stator beam. This can be done e.g. in one alternative by providing guide faces on the stator beam which co-act with corresponding guide means (e.g. rollers) at the mover or element to be moved which is connected with the mover. Preferably the guide means is provided by the stator poles and the electro-magnetic components of the linear motor. This provides a kind of magnetic guide similar to a magnetic monorail as known in high-velocity trains.

In this case preferably the mover has separate magnetic bearing coils/magnets which are controlled independent of electro-magnetic mover components of the linear electric motor, which are controlled to regulate an air gap between the mover and the stator, which separate magnetic bearing coils co-act with the linear stator, preferably with the stator iron. Via this measure the air gap between stator and mover can be controlled via separate windings so that the operation of the motor and the generation of the air gap can be de-coupled as to be optimized separately without affecting each other. The purpose of the separate magnetic bearing coils allows the very precise regulation of the air gap of the linear motor. The magnetic bearing coils of the mover co-act with the linear stator, preferably with the stator iron, to correct any deviations in length/thickness of the air gap. Preferably they are disposed as an extension to the mover, above and below the electro-magnetic mover components, i.e. the linear motor coils / magnets.

In a preferred embodiment of the invention at least two stators are fixed to a stator beam comprising a support structure for the at least two stators and at least one fastening element to fix the support structure to the environment, e.g. the elevator shaft. The whole stator arrangement for the elevator car can thus be mounted to the stator beam, where it is better accessible for mounting and maintenance. Further, this stator beam better allows the mutual fixing of the two stators e.g. in sync or with a desired offset.

Preferably, the two stators are located at opposite sides of the stator beam so that horizontal forces between the stator beam and the mover are eliminated or at least essentially reduced.

Preferably, one or more wireless charging stations is/are located along the length of the stator beam, and the elevator car has a battery as well as a wireless battery charger adapted to interact with the wireless charging station(s), that battery being further configured to energize the electro-magnetic mover components. Via this measure the car is able to energize the electro-magnetic mover components in case of a power fault.

In the most preferred embodiment of the invention, the movers are centralized around the respective stators by means of the above mentioned magnetic bearing, which can e.g. be formed by the electro-magnetic components of the stator and mover of the linear motor. Via said magnetic bearing a constant air gap is maintained between stator and mover counter faces.

Preferably, the linear electric motor is a flux-switching permanent magnet motor (FSPM) which is for example shown in US 2013/0249324 A1. Such a motor is cost-effective, provides high thrust and can operate well even under fault conditions.

Preferably, the at least one mover is configured for a rucksack suspension of the elevator car with the guide rails and stator beams located on the shaft side of the environment. This solution allows the horizontal releasing of the movers from the stator beams and of the guide rails by corresponding mechanisms. Preferably, the mover has on one side mountings for the element, e.g. elevator car and on its counter side guide rollers facing the stator beam(s). The guiding of the car can therefore be realized via an electro-magnetic guide field established between stator and mover and/or via conventional guide means, e.g. guide rollers or guide shoes, running along the stator(s) or stator beam(s).

In an embodiment of the invention the stator beam can be formed by the stator itself, e.g. by a stator rod. In one embodiment of the invention the stator beam can e.g. be formed by a square metal rod having teeth on two opposite sides.

Preferably, the mover is in a direction perpendicular to the stator releasable from the stator as pass the car in a rectangular motion similar to a paternoster lift. Via this measure several elevator cars can be circulated around the two vertical shafts and the horizontal upper and lower connections which allow a high traffic turnover.

Preferably, a conductor rail or bus bar is located along the length of moving path of the elevator car. In this case the mover has at least one contactor, preferably with contact rollers, connecting the conductor rail or bus bar. Conventionally, an elevator car is connected via car cables to an elevator control which car cables hang between the elevator car and a fixing part connected to the elevator shaft. As now the elevator car might be released from the stator, the connection of the mover to the stator beam might not be kept. Therefore, the connection via a bus bar or conductor rail located along the movement path is preferable as on one hand, this connection is independent of the length of the vertical and horizontal parts of a closed rectangular moving path.

Furthermore, the initiating and releasing of the electric connection between the bus bar and the contactor of the elevator car is easy to realize based on the movement of the element away from the stator beam. Therefore, the bus bar is located preferably at the shaft side opposite to side where the mover is removed from the stator beam. In this case, the connector of the mover is pressed against the bus bar or conductor rail located in connection with the environment or with the stator beam. Preferably, the contactor is supported on the mover or elevator car via a support element which comprises a spring means to bias the contactor against the conductor rail or bus bar which ensures a proper electric contact during the travel of the element along the stator beam.

Preferably, the elevator is configured to be installed in a high rise elevator with a vertical length of more than 50 m, preferably more than 100 m, as it doesn't need ropes which usually limit the maximal vertical movement path of an elevator.

As it has been mentioned above, preferably the stator(s) do(es) not have any permanent magnets and as well as no windings either and can thus be fabricated easily. In this case preferably the stator is made of or contains iron.

The stator can be made of one part in vertical direction. Anyway, as the height of the elevator shaft may be extraordinary high, it might for mounting and maintenance purposes be advantageous if the stator with the stator teeth is formed of vertical aligned stator parts mounted end to end, whereby each part has a length between 1 and 5 m, preferably between 2 and 3 m, whereby each stator part is preferably made of one-piece.

In an embodiment of the invention, the/each stator/stator beam may also comprise guide surfaces for guide rollers located at the mover(s).

Preferably, the stator beam has at least two side faces with stator poles having the same pitch and wherein the pitch of the stator poles of both side faces is preferably in length direction of the stator mutually offset, either by a half pitch, preferably, all 4 stators are offset bey ¼ pitch relative to each other. Via this embodiment, the cogging torque of this 3-phase linear motor is reduced, so that the effectivity of the motor is better and the movement is smoother.

Preferably, the mover also has a power source as for example a battery or an accumulator, which is preferably also configured as back-up power source for the mover. The power back up is preferably designed for the electro-magnetic power elements of the motor connected with the mover as e.g. windings or permanent magnets. Thus, with this power source, all electric loads of the mover can be fed. These loads are in case of an elevator car also the lightings, ventilation, door drives and of any IO devices of the elevator car as for example car display panels, loudspeakers, displays, etc. Furthermore, the power of a wireless data connection with any kind of conveyor control can be supplied with the power source.

In this case, preferably the operation of the mover always runs via the power source whereby the power source is loaded via the conductor rail as long as the contactors of the mover are in contact with the conductor rail or bus bar. Via this means, it is ensured that the mover keeps working in any case of power failure. The capacity of the power source is preferably sufficient to drive the mover to a predetermined location in the traveling path, in case of an elevator e.g. to the next landing in the elevator shaft.

In an alternative preferred embodiment, the power supply from the shaft to mover is implemented with coupled coils principle, whereby a primary coil being mounted to the environment or stator beam whereas a secondary coil is moving with the car. When the mover arrives at a certain position, primary and secondary are coupled and power is fed from primary to secondary to a battery mounted to the mover. The primary coil may be located in every stopping floor.

In a preferred embodiment of the invention, the power source can be located in the DC intermediate circuit of the frequency converter forming the electric drive of the mover.

Preferably, at least two parallel stators/stator beams are located in the (each) elevator shaft and at least two movers are located parallel to each other and in a horizontal distance, whereby each of these movers co-act with one of the stator beams. Via this arrangement, the driving force is doubled up as now two movers are provided in parallel for the movement of the element, e.g. elevator car. Furthermore, the suspension of the element is better balanced between the several stator beams.

Furthermore, preferably, the at least two movers are located in succession in vertical direction which doubles up the moving force in connection with only one stator.

The stator poles may be stator teeth are embodied in a stator bar or rod. In this case the stator beam preferably comprises a support structure for at least two stator bars and fastening elements to fix the support structure. The teeth gaps between the stator teeth may be preferably filled with a polymer material to provide together with the teeth a smooth side face of the stator beam, avoiding the accumulation of dirt.

The elevator comprising the linear motor preferably has an emergency unit configured to control the mover to a predetermined location. This could be advantageous in elevators to release trapped passengers.

Following expressions are used as a synonym:; environment - elevator shaft; stator poles - stator teeth; windings - coils - electro-magnetic components.

For the skilled person it is obvious that components mentioned in connection with the present invention can be provided one one-fold or multi-fold according to the needs. For example, one stator or stator beam can co-act with three movers located above each other at the element to be moved. Furthermore, two stators or stator beams may be located at a wall of the environment or even more than two stator beams as e.g. three or four stator beams.

### Brief description of the drawings

The invention is now described hereinafter with respect to the enclosed drawing. In this drawing
- Fig. 1: shows a side view of an elevator shaft with a linear elevator motor according to the invention comprising two parallel stator beams,
- Fig. 2: shows a horizontal cross-section of the parts of the elevator motor and the guide rails in the area between the elevator car and the shaft wall of Fig. 1,
- Fig. 3: shows a cross-section through a stator beam and a mover of Fig. 4,
- Fig. 4: shows a schematic drawing of the function of a switching permanent magnet motor (FSPM) used as the elevator motor, whereby the stator has stator teeth pointing downwards,
- Fig. 5: shows an alternative embodiment of a stator with rounded teeth, whose ends point downwards,
- Fig. 6: shows a vertical cut through a stator and mover with the corresponding magnetic flux lines, whereby the stator teeth have an enlarged base, and
- Fig. 7: shows a side view of an elevator having two elevator shafts which are connected at their upper and lower ends with horizontal passages.

### Description of the preferred embodiments

It is emphasized that identical parts or parts with the same functionality are designated by the same reference numbers in all figures.

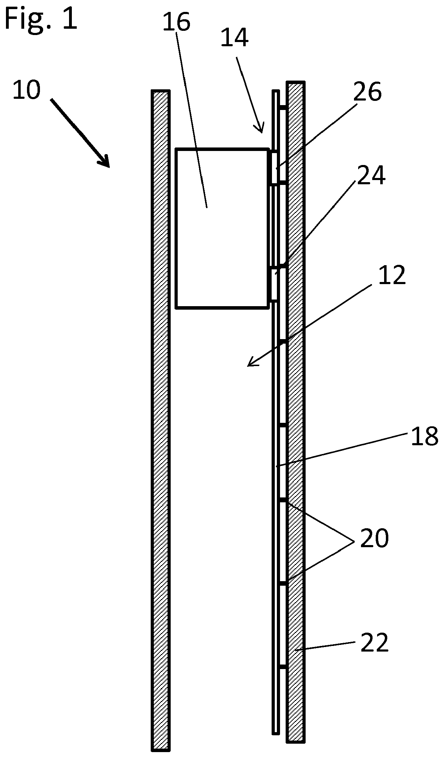

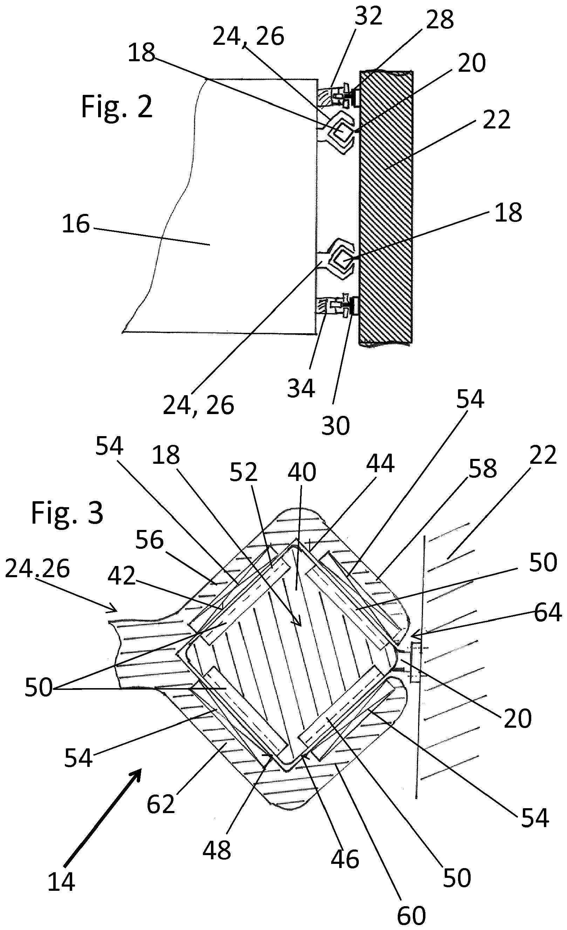

Fig. 1 shows an elevator 10 comprising an elevator shaft 12 wherein an elevator car 16 moves up and down as an element to be moved. The elevator 10 has a linear elevator motor 14. The linear elevator motor 14 comprises stators 50 (see Fig. 3) located in a side face of a stator beam 18 which is mounted with fastening elements 20 to a shaft wall 22 of the elevator shaft 12. In this example the elevator 10 has two parallel stator beams 18, which can be seen in Fig. 2.

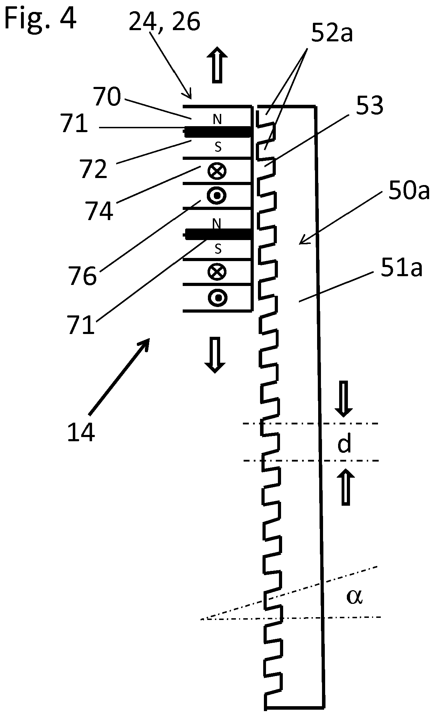

The elevator car 16 comprises two movers 24, 26 located one above the other. The lower mover 24 is located in the lower half of the elevator car whereas the upper mover 26 is located in the upper half of the elevator car. These two movers 24, 26 comprise electro-magnetic components as e.g. irons, windings and permanent magnets 70, 71, 72, 74, 76 (Fig. 4) which co-act with stator poles 52 located in the side faces of the stator beam 18, formed by stator teeth. Accordingly, the elevator car travels upwards and downwards via corresponding control of both movers 24, 26 co-acting with the stator beams 18.

Of course, the elevator car has a corresponding set of two movers 24, 26 for each vertical stator beam 18 so that the elevator car 16 has in total four movers, two lower movers 24 and two upper movers 26 to co-act with two stator beams 18.

Of course, each stator beam 18 may have one or several stators 50 as it is shown in Figs. 2 and 3.

Although it is preferred that the stator beams 18 and movers 24, 26 of the elevator 10 of Fig. 1 also form an electro-magnetic guide for the elevator car 16 so that any guide rollers and guide rails can be omitted, Fig. 2 shows in one embodiment optional car guides 32, 34 of the elevator car 16 co-acting with optional guide rails 28 running vertically along the shaft wall 22 of Fig. 1. The shaft wall 22 comprises two parallel guide rails 28, 30 co-acting with corresponding car guides 32, 34. Each car guide 32, 34 has a set of guide rollers co-acting with the car guide rails 28, 30. As these car guides 32, 34 in connection with the car guide rails 28, 30 are configured for a rucksack type suspension, the corresponding guide system 28, 30, 32, 34 is configured to keep the car 16 horizontally in connection with the shaft wall 22 as these both car guide rails 28, 30 are the only guide rails of the elevator car 16 in the shaft 12. The vertical stator beams 18 as well as the movers 24, 26 of the elevator car 16 are shown in more detail in Fig. 3. Generally, guide rails with a round cross-section may be used which are surrounded by rollers of the car guide, thereby fixing the car horizontally in connection with the guide rail.

According to Fig. 3 the vertical stator beam 18 comprises a metal support structure 40 with a square cross-section. On each side the support structure 40 carries a metal stator rod 50 comprising stator teeth 52, which form the four side faces 42, 44, 46, 48 of the stator beam 18. Each of these stator rods (or bars) 50 with the stator teeth 52 forms a stator of the linear motor 14 so that the stator beam 18 shown in Fig. 3 comprises four stators. The stator teeth 52 co-act with windings 74, 76 (Fig. 4) and mover irons 70,72 and permanent magnets 71 located along counter-faces 54 in the four arms 56, 58, 60, 62 of the C-type profile of the mover 24, 26. This C-type profile of the mover surrounds the stator beam 18 but leaves an opening 64 for the adaption of the fastening elements 20, as the mover 24, 26 travels along the shaft 12.

The stator rods 50 on all four side faces 42, 44, 46, 48 have the same pitch d. Anyway, the first and third side face 42, 46 of the stator beam also have an identical teeth position in vertical direction whereas the second and fourth side face 44, 48 have the same pitch but the teeth position is vertically offset with respect to the stator teeth 52 on the first and third side face 42, 46 by a ¼ pitch.

Via this arrangement, it is ensured that on one hand, the horizontal forces between the stators 50 on opposite sides eliminate each other whereas the vertical offset of the pitches of the side faces oriented rectangular leads to a better efficiency and a smoother run of the elevator motor, as a moving step of such a motor 14 is a half pitch. By the fact that four stators 50 are located within the stator beam 18 the force generated between the movers 24, 26 and the stator beam 18 is multiplied by four, thereby achieving less horizontal ripples and a smoother movement of the movers 24, 26 with respect to the vertical stator beam 18.

Fig. 4 shows the operation principle of the flux switching permanent magnet motor formed by the movers 24, 26 and the stators 50a in the stator beam 18. The stator 50a comprises a stator rod 51 which, preferably as a one-piece part comprises stator teeth 52a which are spaced apart by teeth gaps 53. The pitch d of the stator teeth 52 is identical throughout the length of the stator rod 50. The stator teeth 52a are pointing downwards with respect to the horizontal plane with an acute angle α. The angle with respect to the longitudinal direction of the stator rod 51a is 90° - α. Via this measure the magnetic field generated between stator and mover produces a pulling force on the mover in upwards directions which facilitates the carrying of the car weight against the gravitational force.

The stator 50a in the stator beam 18 in a longer vertical shaft 12 can be comprised of one single stator rod 50 with a corresponding length or by several stator rod parts located one above each other end-to-end, according to the required shaft length. In the connecting areas of stator rod parts located end-to-end above each other the pitch d has to be maintained.

The mover 24, 26 comprises on each counter face 54 a succession of two mover irons 70, 72 between which one thin magnet 71 is located. This package of mover irons 70, 72 and magnet 71 is followed by two windings 74, 76 which are controlled as to produce a magnetic field with opposite direction. This succession 70, 71, 72, 74, 76 of mover irons, permanent magnets and windings is repeated according to the length of the mover. The movement of the mover 24, 26 with respect to the stator rod is accomplished by controlling the both windings 74, 76 to switch the flux direction to the opposite so that with each switching, the mover 24, 26 moves half of the pitch d of the stator teeth 52. Thus, the mover 24, 26 can be controlled to move according to the arrows in upwards or downwards direction with respect to the stator rod 50.

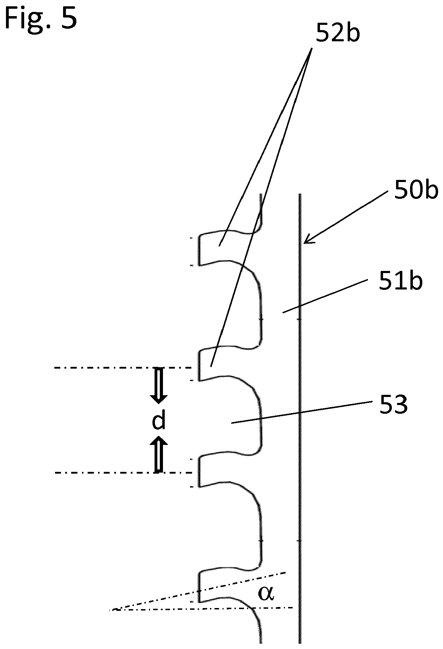

Fig. 5 shows a second embodiment of a stator 50b with a stator rod 51b carrying rounded stator teeth 52b extending to the mover in a pitch d, separated by teeth gaps 53. Of course, the ratio of pitch d and the tooth gap 53 may vary from the drawing, particularly being larger than shown. The rounded stator teeth 52b better match the flux lines of the generated magnetic field and lead to a more economical motor design. The tip 55 of the teeth 52b is pointing downwards in an angle α so as to provide a better pulling force on the mover against the gravitational force.

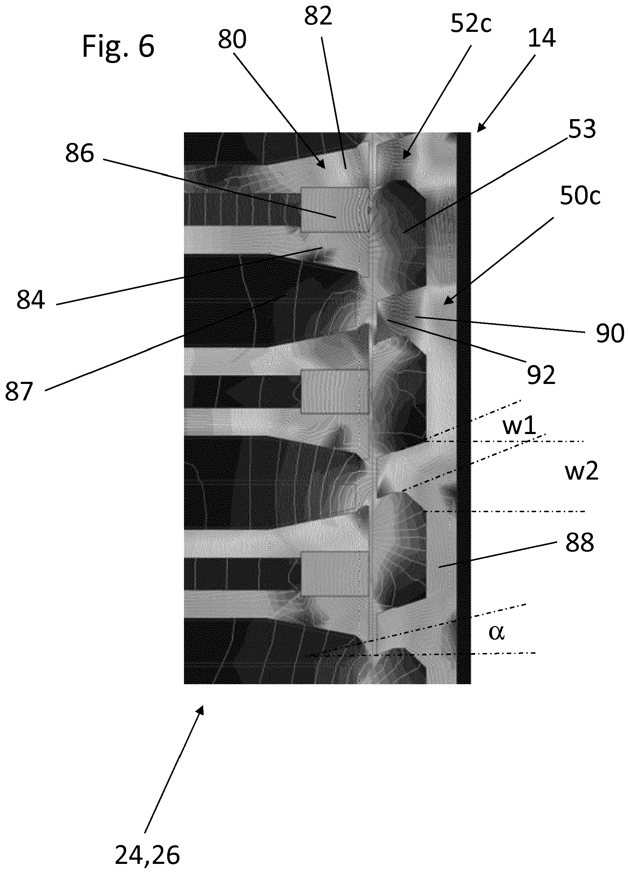

Fig. 6 shows a third embodiment of a stator 50c with a stator rod 51 carrying stator teeth 52c which are connected to the rod 51, preferably as a single piece via an extended base portion 90 with a wider width w2 followed by the downwards directed top portion 95 of the tooth 52c with a smaller width w1. The stator teeth gaps 53 are preferably filled with a polymer material to reduce the collecting of dirt in the gaps 53.

On the other side the mover 24, 26 has mover teeth 80 formed by two armature irons 82, 84 embedding a core magnet 86. The gaps 87 between the mover teeth 80 is at least partially filled with an armature winding. The drawing shows the magnetic flux lines of this motor arrangement. By the form and the orientation of the downwards directed stator teeth 52c the generated magnetic field exerts a pulling force in upwards direction to the mover against the car weight so that this arrangement is optimized to carry the car weight with less of armature material on the stator as well as on the mover side.

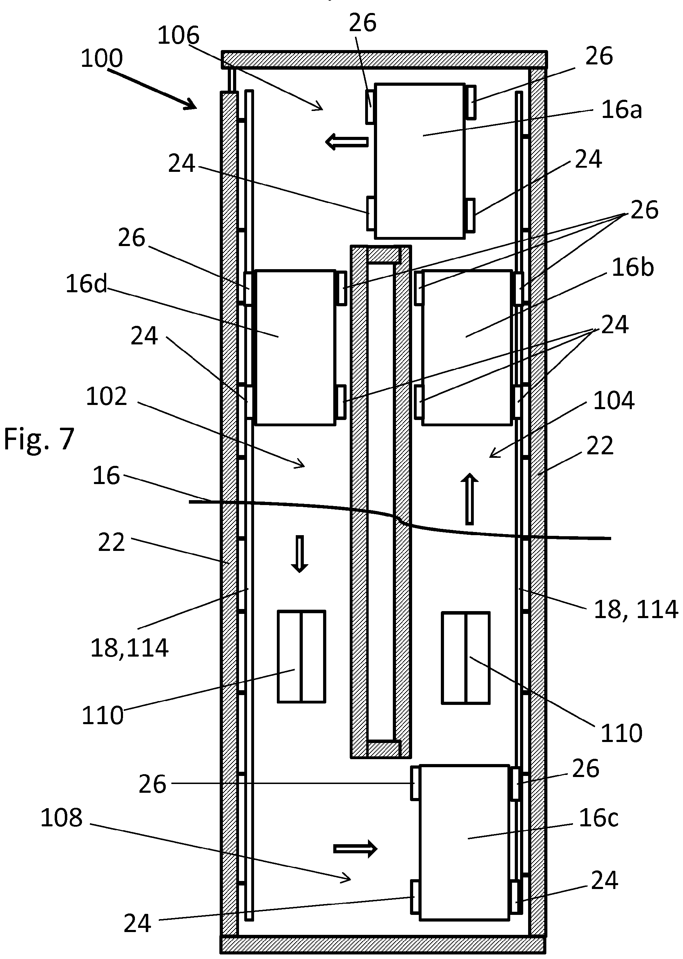

Fig. 7 shows an elevator 100 having two elevator shafts 102, 104 which are connected by an upper horizontal passage 106 at the top end of both shafts 102, 104 as well as a lower horizontal passage 108 at the bottom end of both elevator shafts 102, 104. Thus, the both elevator shafts 102, 104 with the upper and lower horizontal passage 106, 108 form a closed loop whereby the movement of the elevator cars 16a-16d is only allowed in one direction according to the arrows shown in the figure. By this measure it is ensured that cars run only in one direction in each of the shafts which lead to a higher transport capacity and to an easier control of the cars in the shaft.

In both elevator shafts 102, 104, vertical stator beams 18, 114 e.g. according to one of the previous embodiments, or according to Fig. 7 are located which co-act with movers 24, 26 located at the elevator cars 16a-16d. Each shaft 102, 104 may comprise preferably two, three or four parallel stator beams 18, 114. The figure shows landing doors 110 located in the first elevator shaft 102 as well as in the second elevator shaft 104. The cars 16a-16d are horizontally moved in the horizontal passages 106, 108 in a not specified manner by horizontal moving mechanisms.

The inventive elevator concept is preferably designed for high-rise elevators having 20 floors or more. Accordingly, the two shafts 102, 104 are able to accommodate a much larger number of elevator cars than the four cars 16a-16d shown in the figure. Each car 16a-16d is able to move largely independent of the others within the two shafts 102, 104 except the fact that collisions between cars have to be avoided. By the fact that in the first elevator shaft 102 the elevator cars 16a-16d only drive downwards and in the second elevator shaft 104 only drive upwards, the probability of mutual affection is decreased. Furthermore, by this circular moving scheme, the transport capacity of both shafts is drastically increased on one hand because now the two elevator shafts may comprise much more elevator cars than in conventional systems and on the other hand, because in each elevator shaft, all elevator cars only move in the same direction, avoiding counter-movements of cars which reduce an economic shaft use and necessitate extensive anti-collision control.

It is not shown in the figures but is evident for the skilled person that the elevator car has a gripping device which grips the guide faces of guide rails or of the vertical stator beams 114 when the power of the power source (and eventually in case of a power failure of the mains) goes off thus ensuring that the car cannot fall downwards when the movers are not energized any longer.

Accordingly, also in this new multi-shaft multi-car arrangement of the invention, the safety of the elevator cars 16a-16d is always ensured independent whether the car is currently supported by the movers 126 and the vertical stator beams 114 or by any optional support rollers of the elevator car on horizontal guide tracks located in the horizontal passages 106, 108.

The invention can be carried out within the scope of the appended patent claims. Thus, the above-mentioned embodiments should not be understood as delimiting the invention.

### List of reference numbers

- 10: elevator
- 12: elevator shaft
- 14: elevator motor
- 16: elevator car
- 18: stator beam
- 20: fastening elements
- 22: shaft wall /shaft side
- 24: lower mover
- 26: upper mover
- 28: first guide rail
- 30: second guide rail
- 32: first car guide
- 34: second car guide
- 40: support structure
- 42: first side face
- 44: second side face
- 46: third side face
- 48: fourth side face
- 50: stator
- 51: stator rod
- 52: stator teeth
- 53: teeth gaps
- 54: counter face of mover
- 56: first arm of C-profile mover
- 58: second arm of C-profile mover
- 60: third arm of C-profile mover
- 62: fourth arm of C-profile mover
- 70: first mover iron
- 71: permanent magnet
- 72: second mover iron
- 74: first winding
- 76: second winding
- 80: mover teeth
- 82: upper armature iron
- 84: lower armature iron
- 86: core magnet of the mover teeth
- 87: mover tooth gap with armature winding
- 88: stator rod -vertically extending stator part
- 90: base teeth portion
- 92: top teeth portion
- 100: elevator (second embodiment)
- 102: first elevator shaft
- 104: second elevator shaft
- 106: upper horizontal passage
- 108: lower horizontal passage
- 110: landing door
- 114: stator beam (second embodiment)
- W1: width 1 of the downwards oriented top portion
- W2: width 2 of the base portion when meeting the stator rod
- α: downwards tilting angle of the stator teeth or of their top portion

## Claims

1. Elevator (10, 100) comprising at least one elevator car (16) running in an elevator shaft which elevator does not have a counterweight and in which elevator the elevator car (16) is suspended and driven by a linear electric motor (14) comprising at least one linear stator (50) having stator teeth (52), which stator (50) is designed to be located in a fixed correlation to an environment and extending over a vertical movement path of the elevator car (16) in the shaft, and at least one mover (24, 26; 126) connected to the at least one elevator car (16) and co-acting and moving along the stator (50), **characterized in that** at least the top portion (92) of the stator teeth (52) facing the mover (24, 26) is extending downwards.

2. Elevator (10, 100) according to claim 1, wherein the stator teeth (52) are extending downwards over the upper part of their length, preferably over their entire length.

3. Elevator (10, 100) according to claim 1, wherein the stator teeth (52) are extending downwards only a half of their total length at the maximum.

4. Elevator (10, 100) according to one of the preceding claims, wherein the central line of the stator teeth (52) is curved.

5. Elevator (10, 100) according to one of the preceding claims, wherein the base portion (90) of the stator teeth (52) is wider (w2) than their top portions (92) facing the mover (24, 26).

6. Elevator (10, 100) according to one of the preceding claims, wherein the mover (24, 26) has electro-magnetic mover components of the linear electric motor (10, 100), which electro-magnetic mover components co-act with the linear stator (50), preferably with the stator iron, and which electro-magnetic mover components are controlled to drive the elevator car along the movement path in the shaft.

7. Elevator (10, 100) according to claim 6, wherein the electro-magnetic mover components are at the same time controlled to regulate an air gap between the mover (24, 26) and the stator (50).

8. Elevator (10, 100) according to one of the preceding claims, wherein at least two stators (50) are fixed to a stator beam (18; 114) comprising a support structure (40) for the at least two stators (50) and at least one fastening element (20) to fix the support structure (40) to the environment, e.g. the elevator shaft.

9. Elevator (10, 100) according to one of the preceding claims, wherein the linear electric motor (14) is a flux-switching permanent magnet motor (FSPM).

10. Elevator (10, 100) according to one of the preceding claims, wherein the at least one mover (24, 26) is located on one side of the elevator car (16) for a rucksack-suspension.

11. Elevator (10, 100) according to one of the preceding claims, wherein the mover (126) is in a direction perpendicular to the stator beam releasable from the stator beam (114).

12. Elevator (10, 100) according to one of the preceding claims, wherein one or more wireless charging stations is/are located along the length of the stator beam, and the elevator car has a battery as well as a wireless battery charger adapted to interact with the wireless charging station(s), that battery being further configured to energize the electro-magnetic mover components.

13. Elevator (10, 100) according to one of the preceding claims, being configured to be installed as a high rise elevator with a vertical length of more than 50 m, preferably more than 100 m.

14. Elevator (10, 100) according to one of the preceding claims, wherein the stator(s) (50) does not have any permanent magnets and as well as no windings either.

15. Elevator (10, 100) according to one of the preceding claims, wherein the stator (50) is made of or contains iron.

16. Elevator (10, 100) according to one of the preceding claims, wherein the stator (50) with the stator teeth (52) consists of one piece stator parts having a length of 1 m to 5 m, preferably of 2 m to 3 m, which stator parts are connected end-to-end.
